# EUROPÄISCHE PATENTSCHRIFT

(11) **EP 1 634 365 B1**
(45) Veröffentlichungstag und Bekanntmachung des Hinweises auf die Patenterteilung: **02.01.2013**
(21) Anmeldenummer: 04739904.3
(22) Anmeldetag: 15.06.2004
(51) Int. Cl.: H02M 7/48, H02J 3/38, F03D 7/04

(54) **WINDENERGIEANLAGE**
WIND FARM
EOLIENNE

(30) Priorität: 16.06.2003 DE 10327344
(43) Veröffentlichungstag der Anmeldung: 15.03.2006
(60) Teilanmeldung: 11010030.2
(73) Patentinhaber: REpower Systems SE, 22335 Hamburg (DE)
(72) Erfinder: ALTEMARK, Jens, 24768 Rendsburg (DE); MATZEN, Björn, 24395 Nieby (DE); ZEUMER, Jörg, 24768 Rendsburg (DE)
(74) Vertreter: Emmel, Thomas
(86) Internationale Anmeldenummer: PCT/EP2004/006434
(87) Internationale Veröffentlichungsnummer: WO 2004/114493

(56) Entgegenhaltungen:
- DE-A- 10 040 273
- US-A- 4 281 376
- US-A- 5 083 039

## Beschreibung

Die vorliegende Erfindung betrifft eine Windenergieanlage mit einem elektrischen System.

Bekannte Windenergieanlagen weisen einen Rotor mit mindestens einem Rotorblatt auf, der mit einem Generator zur elektrischen Leistungserzeugung gekoppelt ist, wobei die erzeugte Leistung in der Regel in ein elektrisches Stromnetz eingespeist wird.

Elektrische Stromnetze geben für den Netzanschluss von z. B. einer Windenergieanlage Mindestanforderungen vor, wie z. B. die Einhaltung der Netzfrequenz, Wirkleistungsabgabe und Blindleistungsbereitstellung, um die Sicherheit und Zuverlässigkeit des Netzbetriebs zu gewährleisten.

Um diese Anforderungen zu erfüllen, ist in Windenergieanlagen ein elektrisches System vorgesehen, über das unter anderem die vorgegebenen Parameter der öffentlichen Stromnetze einstellbar sind, aber auch z. B. die Regelung und Steuerung der Anlage z. B. über eine Winkelverstellung der Rotorblätter durchgeführt wird.

Das elektrische System besteht im allgemeinen aus unterschiedlichen Systemeinheiten, wobei die Systemeinheiten elektronische, elektrische und/ oder elektromechanische, und/ oder sensorische Komponenten, und/ oder elektrische Schutzeinrichtungen aufweisen. In der Regel sind mindestens einige Komponenten einer elektrischen Systemeinheit entsprechend ihrer Aufgaben in ein oder mehrere Funktionsmodule zusammengefasst sind, die mindestens eine Funktion in Verbindung mit der elektrischen Leistungserzeugung ausführen.

Elektronische Komponenten können zum Beispiel Steuerungsrechner sein. Elektrische Komponenten können Steuerkabel, Spannungsversorgungen oder aber auch unterbrechungsfreie Spannungsversorgungen sein. Zu den elektromechanischen Komponenten gehören z. B. Relais, Schütze. Sensorische Komponenten umfassen alle Einrichtungen zum Erfassen von Meßdaten wie zum Beispiel Sensoren zur Messung von Temperatur, Druck, Drehzahl und Windgeschwindigkeit.

In der Regel umfassen die elektrischen Systemeinheiten mindestens eine Einrichtung zur Kopplung des Generators an ein elektrisches Stromnetz sowie eine Steuerungseinrichtung mit einem Betriebsführungsrechner, die unter anderem die elektrische Leistungserzeugung optimiert.

Damit eine Windenergieanlage Gewinne erwirtschaftet, ist es notwendig, dass sie bei entsprechendem Windaufkommen zuverlässig verfügbar ist. Daher sind die Anlagen generell so ausgelegt, dass Stillstandszeiten aufgrund von Defekten in der Anlage vermieden werden. Ein Beispiel dafür ist der Einsatz besonders hochwertiger Komponenten, die geringe Ausfallquoten aufweisen.

Für den Fall, dass dennoch ein Defekt auftritt, muss ein Techniker zu der Anlage fahren und den Defekt vor Ort beheben. Besonders bei Offshore-Anlagen ergibt sich aber das Problem, dass ein Techniker bei ungünstigen Wetterverhältnissen die Anlage nicht oder nur schwer erreichen kann. Dies hat zur Folge, dass bei gleichzeitigen Auftreten eines Defekts und ungünstigen Wetterverhältnissen ein Techniker nicht umgehend zu der Anlage gelangen kann um den Defekt zu beheben, so dass die Anlage über einen längeren Zeitraum still steht und keinen Gewinn erwirtschaftet.

Auch kann es vorkommen, dass die Wetterbedingungen, insbesondere die Wellenhöhe nur einen Zugang über das Helikopter-hoisting-Verfahren zulassen, bei dem der Techniker sowie benötigtes Werkzeug und Ersatzteile von einem Hubschrauber auf eine Plattform abgeseilt werden. In diesem Falle ist es nur möglich, kleinere Reparaturen durchzuführen, der Austausch größerer Komponenten ist aber unmöglich.

Da es sich aber besonders bei Offshore-Anlagen um Anlagen handelt, die aufgrund ihrer Größe besonders ertragreich arbeiten, ist der wirtschaftliche Verlust bei Ausfall einer Anlage auch besonders hoch.

Aus der DE 100 40 273 ist eine gattungsmässe Anlage bekannt, bei der für Funktionsmodule mindestens ein Parallemodul vorgesehen sein kann, das bei einem Ausfall des Funktionsmoduls dessen Aufgaben zumindest teilweise übernehmen kann, und so dazu beiträgt, das die Windenergieanlage betriebsbereit bleibt. Aufgabe der vorliegenden Erfindung ist die Schaffung einer Windenergieanlage, die auftretende Defekte dergestalt kompensiert, dass eine optimale Leistungserzeugung gewährleistet ist.

Gelöst wird die Aufgabe durch eine Windenergieanlage mit einem elektrischen System, die die Merkmale des Anspruchs 1 aufweist.

Die erfindungsgemäße Windenergieanlage weist einen Rotor mit mindestens einem Rotorblatt auf, der direkt oder indirekt mit einem Generator zur elektrischen Stromerzeugung gekoppelt ist, und einem elektrischen System, bestehend aus unterschiedlichen elektrischen Systemeinheiten, die elektronische, elektrische und/ oder elektromechanische, und/ oder sensorische Komponenten und/ oder elektrotechnische Schutzeinrichtungen aufweisen.

Erfindungsgemäß sind alle Komponenten einer elektrischen Systemeinheit oder bestimmte Komponenten der elektrischen Systemeinheit entsprechend ihrer Aufgaben in ein oder mehrere Funktionsmodule (250, 250') zusammengefasst, die mindestens eine Funktion in Verbindung mit der elektrischen Leistungserzeugung ausführen, zusammengefasst, wobei zu mindestens einem Funktionsmodul mindestens ein Parallelmodul vorgesehen ist, das bei Normalbetrieb der Anlage eine gleiche oder ähnliche Funktion des Funktionsmodul ausführt oder ausführen kann, und wobei Funktionsmodul und Parallelmodul dergestalt miteinander verbunden oder verbindbar sind, dass bei einer Betriebsstörung, bei der ein Funktionsmodul oder ein Parallelmodul ausfällt, das verbleibende funktionsfähige Funktions- oder Parallelmodul zumindest teilweise die elektrische Leistungserzeugung aufrecht erhält.

Gemäß der vorliegenden Erfindung werden bestimmte oder alle Komponenten der Systemeinheiten in Funktionsmodule zusammengefaßt. Die entstehenden Funktionsmodule sind so gestaltet, dass sie bestimmte Funktionen im Zusammenhang mit der elektrische Leistungserzeugung der Anlage ausführen. Zu einem Funktionsmodul ist mindestens ein Parallelmodul vorgesehen, dessen wesentliche Aufgabe das Aufrechterhalten der elektrischen Leistungserzeugung ist.

Durch das Vorsehen des Parallelmoduls wird die Möglichkeit geschaffen, mit dem Auswechseln eines defekten Funktionsmoduls bis zur Besserung der Wetterbedingungen oder bis zum nächsten regulären Wartungstermin zu warten. Dies bietet besonders bei Offshore-Anlagen den Vorteil, dass die Fahrten zu den Anlagen weitgehend auf die regulären Wartungstermine begrenzt und auf diese Weise die Reparaturkosten gesenkt werden können.

Gemäß Anspruch 1 kann das Parallelmodul und zum Teil auch das Funktionsmodul unterschiedlich ausgestaltet sein, um diese Aufgabe zu erfüllen.

Zum einen kann das Parallelmodul so ausgebildet sein, dass es eine gleiche Funktion wie das Funktionsmodul ausführt. Dabei kann das Parallelmodul diese Funktion gleichzeitig mit dem Funktionsmodul ausführen, das bedeutet, die Funktion zur Erzeugung der elektrischen Leistung gemeinsam von beiden Modulen ausgeführt wird, so das bei einer Betriebsstörung, bei der ein Funktions- oder ein Parallelmodul ausfällt, die Leistungserzeugung über das verbleibende Modul entsprechend seines Funktionsanteils weiter erfolgt und somit auf vorteilhafte Weise ein kontinuierlicher, wenn auch eingeschränkter Betrieb der Anlage gewährleistet werden kann.

Eine Anordnung ist im Bereich der Generatortechnik seit vielen Jahren bekannt. Dort wurde aus wirtschaftlichen Überlegungen heraus das Generatorsystem in zwei bis vier parallel geschalteten Generatoren aufgesplittet, z.B. zwei 750kW Generatoren für eine 1,5MW Anlage oder vier 250kW Generatoren für eine 1MW Anlage. Hintergrund dieser Entwicklungen war aber ausschließlich dass Problem, dass die großen Generatoren nicht oder nur mit erheblich höheren Kosten produziert werden konnten, als eine größere Anzahl kleinerer Einheiten, d.h. die Reduktion der Investitionskosten ist das Ziel gewesen. Insbesondere die Getriebe dieser Maschinen waren aber nicht dafür geeignet, bei Ausfall einer der Generatoren die Stromerzeugung fortzusetzen, da die unsymmetrische Belastung zu Getriebeschäden führte.

Eine Generatoranordnung, die zur Aufrechterhaltung der Stromerzeugung neben einem Läufer wenigstens zwei Statoren aufweist, wobei jedem Stator wenigstens ein Umrichter zugeordnet ist, ist auch aus der DE 100 40 273.9 A1 bekannt. Jedoch weist die Ausbildung eines Generators, der wenigstens zwei Statoren aufweist den großen Nachteil auf, dass dadurch erhebliche Mehrkosten enstehen.

Auch bei der erfindungsgemäßen Ausführung werden die Investitionskosten durch den komplexeren Aufbau zunächst erhöht, jedoch nicht in dem gleichen Maß, wie sie durch die Ausbildung eines Generators mit wenigstens zwei Statoren entstehen würde. Die geringeren Mehrkosten bieten gegenüber dem Stand der Technik den wesentlichen Vorteil, dass eine Amortisierung der Mehrkosten durch die höhere Zuverlässigkeit bei der Stromerzeugung über die 20 jährige Lebensdauer der Windenergieanlage schneller erreicht wird.

Weiterhin kann das Parallelmodul so ausgebildet sein, dass es eine ähnliche Funktion, wie das Funktionsmodul ausführt, wobei diese ähnliche Funktion aber ebenso zur Leistungserzeugung beiträgt oder beitragen kann, wie die gleiche Funktion. Beispielsweise kann das Parallelmodul kleiner dimensioniert sein, als das Funktionsmodul und damit in der Herstellung billiger sein.

Dabei kann das Parallelmodul ebenfalls so angeordnet sein, dass es die Funktion gemeinsam mit dem Funktionsmodul ausführt.

Bei der erfindungsgemässen Windenergieanlage ist weiterhin vorgesehen, dass die Steuerungseinrichtung eine Betriebsführung mittels Umgebungs- und Anlagenparametem durchführt. Betriebsführung heißt in diesem Zusammenhang sowohl die Steuerung bzw. Regelung der Anlage im Betrieb zur Optimierung der Leistungserzeugung als auch die übergeordnete Betriebsführung über die Regelungs- und Steuerungsfunktionen ausgeführt werden, die nicht direkt mit der Leistungserzeugung zusammenhängen wie z.B. Windnachführung, Schmiermittelversorgung etc. sowie die sicherheitstechnische Überwachung und eventuelle Zustandsüberwachung der Systeme (Diagnose).

Es ist bekannt, dass eine Windenergieanlage zwei Steuerungsrechner aufweisen kann, die üblicher Weise in einer Master/ Slave-Anordnung ausgebildet ist. Der erste Steuerungsrechner (Master) ist z. B. für die übergeordnete Betriebsführung und für die Anpassung der Anlage an das elektrische öffentliche Netz zuständig, insbesondere das Anpassen der erzeugten elektrischen Energie an die vorgegebenen Einspeisungsparameter des öffentlichen Netzes.. Der zweite Steuerungsrechner (Slave) übernimmt die Sensordatenerfassung und -auswertung und die Steuerung und Regelung der Anlage bezüglich kurzzeitiger Betriebsvorgänge.

Gemäß der vorliegenden Erfindung können beide Rechner so ausgebildet sein, dass bei Ausfall eines Rechners der andere Rechners dessen Funktion übernehmen kann. Dabei können die Rechner auch überdimensioniert ausgebildet sein, so dass der verbleibende Rechner bei einem Ausfall die Funktion komplett übernehmen kann. Aus Kostengründen bietet es sich aber an, die Überdimensionierung der Rechner so gering wie möglich auszuführen, so dass im wesentlichen die Aufrechterhaltung der Stromerzeugung gewährleistet wird, auch wen dies den Nachteil bietet, dass der verbleibende Rechner bestimmte Betriebssituationen zum Beispiel Optimierungsmaßnahmen hinsichtlich der Leistungserzeugung oder das Ausregeln extremer Umgebungsereignisse (extreme Windböen, extreme Netzereignisse wie z.B. Spannungs- oder Frequenzeinbrüche) nicht mehr ausführen kann.

Es besteht aber auch die Möglichkeit, dass das Parallelmodul während des Normalbetriebs der Anlage die Funktion nicht ausführt, sondern dergestalt in die Anlage eingebunden ist, dass es erst bei Ausfall des Funktionsmoduls aktiviert wird und die Funktion des ausgefallenen Funktionsmoduls übernimmt und so die Leistungserzeugung zumindest teilweise aufrecht erhalten wird.

So können zum Beispiel die sensorischen Komponenten, die die äußeren Einflüsse wie Windgeschwindigkeit, Temperatur etc. messen, zu einem Funktionsmodul "Sensorik" zusammengefaßt sein. Entsprechend könnte hierzu ein Parallelmodul vorgesehen sein, das die gleichen sensorischen Komponenten umfasst. Fällt das Funktionsmodul "Sensorik" aus irgendeinem Grund aus, dann wird das Parallelmodul "Sensorik" aktiviert und übernimmt dessen Aufgabe.

In einer vorteilhaften Ausgestaltung der Erfindung kann das Parallelmodul auch so ausgebildet sein, dass es bei Ausfall des Funktionsmoduls dessen Funktion vollständig übernehmen kann. Diese Ausgestaltung bietet den Vorteil, dass das Parallelmodul quasi als Ersatzmodul fungiert, so das bei Ausfall des Funktionsmoduls die elektrische Leistungserzeugung vollständig aufrecht erhalten werden kann und keine wirtschaftlichen Verluste entstehen.

In einer weiteren vorteilhaften Ausgestaltung der Erfindung kann vorgesehen sein, dass die Windenergieanlage mindestens zwei Funktionsmodule, die gleiche oder ähnliche Funktionen ausführen, sowie mindestens ein Parallelmodul aufweist, wobei das Parallelmodul bei Ausfall eines Funktionsmoduls dessen Funktion vorzugsweise vollständig übernimmt.

Das Vorsehen von mindestens zwei Funktionsmodulen, die eine Funktion in Verbindung mit der Erzeugung der elektrischen Leistung gemeinsam ausführen, bietet den Vorteil, dass das Parallelmodul, ebenfalls nur halb so groß dimensioniert sein muss, damit bei Ausfall einer Komponente gewährleistet werden kann, dass die Leistungserzeugung vollständig aufrecht erhaltbar ist. Eine Erhöhung der Anzahl der Funktionsmodule reduziert die Größe des erforderlichen Parallelmoduls entsprechend. Je nach Ausfallwahrscheinlichkeit und Kosten des entsprechenden Funktionsmoduls lässt sich die wirtschaftlich optimale Konfiguration individuell bestimmen.

Es besteht aber auch die Möglichkeit, beispielsweise das Parallelmodul gemäß einer weiteren vorteilhaften Ausgestaltung der Erfindung kleiner und damit günstiger zu dimensionieren, so dass es die Aufgabe des Funktionsmoduls nur teilweise übernimmt. Diese Ausgestaltungsmöglichkeit bietet den Vorteil, dass auf kostengünstige Weise die Erzeugung der elektrischen Leistung zumindest teilweise aufrecht erhaltbar ist.

Bei der vorstehenden einfachen Redundanz des Steuersystems besteht die Schwierigkeit, bei einer Abweichung zwischen den Ergebnissen von zwei Modulen das fehlerhafte Modul zu diagnostizieren. Deshalb ist es vorteilhaft, die dreifache Ausführung besonders störanfälliger Elemente vorzusehen. Dies ermöglicht dann nach dem Prinzip der Mehrheitsentscheidung die zuverlässige Diagnose ausgefallener oder fehlerhafter Module, solange nur ein von drei Modulen ausfällt. Bei Ausfall von zwei Modulen ist aber ebenfalls die Diagnose durch eine auf Plausibilitätsprüfung ausgerichtetes Steuerprogramm (Expertensystem) realisierbar.

Gemäß einer weiteren vorteilhaften Ausgestaltung der Erfindung kann eine elektrische Systemeinheit eine Steuerungseinrichtung zur Optimierung der elektrischen Stromerzeugung umfassen, wobei die Steuerungseinrichtung mindestens einen Betriebsführungsrechner aufweist.

Zusätzlich kann die erfindungsgemäße Windenergieanlage gemäß einer weiteren vorteilhaften Ausgestaltung mindestens ein Versorgungsmodul aufweisen, dass die Steuerungseinrichtung mit elektrischer Energie versorgt, wobei das Versorgungsmodul gemäß einer weiteren vorteilhaften Ausgestaltung der Erfindung so ausgebildet ist, dass es unabhängig vom öffentlichen elektrischen Netz ist.

Vorzugsweise sind mindestens zwei Versorgungsmodule für die Steuerungseinrichtung netzunabhängig ausgebildet, um somit auch bei Netzausfall die Versorgung der Steuerung sicherzustellen. Eine redundante Ausführung der netzunabhängigen Versorgung der Steuerung ist bei einer Windenergieanlage insbesondere deshalb von Wichtigkeit, weil beim Ausfall der Steuerung eine Notbremsung durchgeführt wird, die alle Anlagenkomponente stark beansprucht und zu hohem Verschleiß führt.

Besonders vorteilhaft ist vorgesehen, die redundante Versorgung mit unterschiedlichen physikalischen Wirkprinzipien zu realisieren. Die im Stand der Technik oft eingesetzten handelsüblichen, batteriegestützten Systeme (auch USV oder UPS genannt) weisen in der Praxis den Nachteil auf, insbesondere bei tiefen Temperaturen sehr störanfällig zu sein. Die Kombination von mindestens zwei Versorgungen mit unterschiedlicher Funktionsweise ist daher ausdrücklich Bestandteil der vorliegenden Erfindung. Besonders geeignet ist die Kombinationen eines preiswerten Batteriespeicher mit dem sehr zuverlässigen, aber teuren Kondensator-Speicher (UltraCaps). Um für eine längere Zeitdauer bei Netzausfall die Versorgung der Steuereinheit zu ermöglichen, bietet sich die Kombination mit einer Solarzelle oder mit einem Kleinwindrad oder der Kombination von beidem für besonders hohe Versorgungssicherheit an. Solarzelle oder Kleinwindrad können vorteilhaft oben auf der Maschinengondel, unterhalb des Rotors seitlich am Turm oder bei Offshore-Windenergieanlagen an einer am Turm befestigten Plattform angebracht sein. Die Orientierung ist zur Sonnenseite und/oder der Luvseite der Hauptwindrichtung auszuführen, um maximale Versorgungssicherheit zu gewährleisten.

Gemäß einer weiteren vorteilhaften Ausgestaltung kann mindestens eine weitere Steuerungseinrichtung vorgesehen sein, wobei die erste Steuerungseinrichtung als Funktionsmodul und die zweite Steuerungseinrichtung als Parallelmodul einsetzbar ist. Diese Ausgestaltung bietet den Vorteil, dass auch bei einem kompletten oder partiellen Ausfall der Steuerungseinrichtung die Leistungserzeugung stets aufrecht erhalten werden kann.

In einer weiteren vorteilhaften Ausgestaltung der Erfindung kann vorgesehen sein, dass zu mindestens einer der elektronischen, elektrischen und/ oder elektromechanischen Komponenten mindestens eine Ersatzkomponente vorgesehen ist, wobei Komponenten und Ersatzkomponenten dergestalt miteinander verbunden sind, dass bei einer Betriebsstörung in einer Komponente die Ersatzkomponente deren Aufgabe übernimmt.

Es ist bekannt für sensorische Komponenten wie zum Beispiel das Anemometer zur Messung der Windgeschwindigkeit eine Ersatzkomponente vorzusehen. Dies wird bisher aber nur für sensorische Komponenten vorgenommen, deren fehlerhafte Anzeige ein erhebliches Sicherheitsrisiko für die gesamte oder wesentliche Teilbereiche der Anlage darstellt.

Das Vorsehen von Ersatzkomponenten bietet den Vorteil, dass auch bei Ausfall einer Komponente ein kontinuierlicher Betrieb der Windenergieanlage gewährleistet werden kann.

Dabei ist es nicht erforderlich für jede Komponente eine Ersatzkomponente vorzusehen. Vorteilhaft ist eine intelligente Vorauswahl der Komponenten für die das Vorsehen einer Ersatzkomponente sinnvoll wäre. Diese Vorauswahl kann zum Beispiel Komponenten betreffen deren Ausfall zu einem sofortigen Stop der Anlage führen würde. Sie kann aber auch Komponenten betreffen, bei denen es aufgrund von Erfahrungen mit Windenergieanlagen bekannt ist, dass sie besonderen Belastungen ausgesetzt sind. Auch bietet es sich an, Komponenten doppelt vorzusehen, deren Ausfallverhalten generell bekannt ist.

In einer weiteren Ausführungsform der Erfindung ist die Windenergieanlage so ausgebildet, dass sie über ein Fernüberwachungsystem femwartbar ist.

Zusätzlich kann das Fernüberwachungssystem auch so ausgebildet sein, dass es auf die Steuerungseinrichtung der Windenergieanlage zugreifen kann.

Die Steuerungseinrichtung einer modernen Windenergieanlage ist in der Regel so ausgebildet, dass sie über sogenannte Steuerungsparameter parametrierbar, d.h. z.B. auf den speziellen Anlagentyp oder die individuellen Standortgegebenheiten einstellbar ist.

Weiterhin werden der Steuerungseinrichtung Umgebungs- und Anlagenparameter zugeführt, wobei es sich bei Umgebungsparametern um Parameter handelt, die die Umgebung der Anlage betreffen, wie zum Beispiel Lufttemperatur, Luftdruck und Windgeschwindigkeit. Die Umgebungsparameter werden in der Regel von der Anlagensensorik gemessen und die gemessenen Werte werden der Steuerungseinrichtung mitgeteilt. Spezielle Parameter, wie z.B. die aktuellen Anforderungen der Netzbetreiber können der Anlagensteuerung aber auch extern, z. B. über Datenleitungen mitgeteilt werden.

Anlagenparameter sind die Anlage betreffende Parameter, diese Parameter werden in der Regel während des Betriebs in der Anlage gemessen und der Steuerungseinrichtung mitgeteilt. Dabei kann es sich zum Beispiel um die elektrische Leistung, die Drehzahl des Rotors, die Drehzahl des Generators, die Blatteinstellwinkel, die Temperatur der Anlage oder bestimmter Komponenten, Module oder Systemeinheiten, Hydraulikdrücke, die Messung elektrischer Ströme oder Spannungen, etc. handeln.

Die Fernwartbarkeit einer Windenergieanlage über ein Femüberwachungssystem bietet zum einen den Vorteil, dass der Betrieb der Anlage aus der Ferne überprüft werden kann. Zum Beispiel kann der Betreiber der Anlage über das Femüberwachungssystem die Ergebnisse der Leistungserzeugung abfragen. Es besteht aber auch die Möglichkeit, dass über das Fernüberwachungssystem eine Betriebsstörung in der Anlage angezeigt wird, wobei in einer vorteilhaften Ausgestaltung der Erfindung, das Femüberwachungssystem zum Beispiel auch so ausgebildet sein kann, das ein Experte über das Fernüberwachungssystem eine komplette Fehlerdiagnose durchführt, um den Grund für die Betriebsstörung zu identifizieren.

Der Zugriff des Fernüberwachungssystem auf die Steuerungseinrichtung bietet zudem den Vorteil, dass der Steuerungseinrichtung geänderte Steuerungs-, Umgebungs- und Anlagenparameter zugeführt werden können. Es wird damit aber auch die Möglichkeit geschaffen, beispielsweise eine neue Betriebssoftware über das Femüberwachungssystem auf den Betriebsführungsrechner der Steuerungseinrichtung zu übertragen und zu aktivieren.

Aufgrund der Fernwartbarkeit über das Fernüberwachungssystem wird zudem die Möglichkeit geschaffen, dass nachdem ein Fehler in der Anlage diagnostiziert worden ist, eine Fehlerbehebung über das Fernüberwachungssystem durchgeführt werden kann, so dass der Betrieb der Anlage aufrecht erhalten wird.

Zudem kann das Femüberwachungssystem, wenn die Windenergieanlage zu einem Windpark, der aus mehreren Windenergieanlagen besteht, gehört, Teil der Parksteuerung sein oder mit dieser gekoppelt. Häufig wird die über die Windenergieanlagen erzeugte Gesamtleistung eines Windparks zusammen in das elektrische Netz eingespeist. Um die Gesamtleistung der Anlagen an die Netzanforderungen anzupassen, kann durch diese Ausgestaltung die Parksteuerung über das Femüberwachungssystem auf die Anlage zugreifen und die Leistung der Anlage entsprechend modifizieren.

Wie oben angesprochen ist erfindungsgemäss vorgesehen, dass die Steuerungseinrichtung der Windenergieanlage eine Betriebsführung mittels Umgebungs- und Anlagenparametern durchführt.

Generell ist die Betriebsführung einer Windenergieanlage so ausgelegt, dass die Anlage in zulässigen Bereichsgrenzen der Umgebungs- und Anlagenparametern betrieben wird, wobei diese Bereichsgrenzen über Auslegungsparameter definiert werden, dabei können Auslegungsparameter insbesondere spezielle Steuerungsparameter sein. Zum Beispiel kann durch die Auslegungsparameter vorgegeben sein, dass die Anlage nur in einem bestimmten Anlagentemperaturbereich gefahren werden soll und das bei Überschreiten dieses Temperaturbereichs beispielsweise die Generatorleistung reduziert wird, um die Anlagentemperatur zu senken.

Zudem kann über die Auslegungsparameter festgelegt sein, dass die Windenergieanlage bei sehr niedrigen Außentemperaturen so angefahren werden soll, dass die Anlage sehr langsam, im Extremfall über mehrere Stunden, hochgefahren wird, um auf diese Weise eine gleichmäßige Erwärmung aller Komponenten zu ermöglichen, bevor die Anlage unter Volllast betrieben wird.

In einem weiteren Beispiel kann über die Auslegungsparameter festgelegt sein, dass bei sehr turbulenten (böigen) Windverhältnissen die Nenndrehzahl der Windenergieanlage heruntergesetzt wird, um damit zu vermeiden, dass die Anlage durch eine starke Windböe in einen unzulässig hohen Drehzahlbereich gerät.

Die Auslegungsparameter können beispielsweise im Normalbetrieb als Standard-Auslegungsparameter in dem Betriebsführungsrechner der Steuerungseinrichtung hinterlegt sein, oder sie werden anhand von anderen in der Steuerung vorliegenden Daten vom Betriebsführungsrechner errechnet.

Bei einer Betriebsstörung kann der Betriebsführungsrechner in einer vorteilhaften Ausgestaltung der Erfindung auf Temporär-Auslegungsparameter zugreifen. Diese Temporär-Auslegungsparameter können im Betriebsführungsrechner für bestimmte Fälle der Betriebsstörung, zum Beispiel Ausfall eines Funktionsmoduls hinterlegt sein. Es gibt aber beispielsweise auch die Möglichkeit, dass der Betriebsführungsrechner die Temporär-Auslegungsparameter erst bei einer Betriebsstörung entsprechend des Störfalls erzeugt bzw. errechnet, ggf. mittels von dem Betriebsführungsrechner zugeführten Daten, die zum Beispiel manuell eingespeist werden.

Über die Temporär-Auslegungsparameter definiert der Betriebsführungsrechner an die Betriebsführung angepasste Temporär-Bereichsgrenzen für zulässige Umgebungs- und Anlagenparameter, die eine Aufrechterhaltung der elektrischen Leistungserzeugung ermöglichen.

Beispielsweise kann so bei einer Betriebsstörung bei einem von insgesamt vier parallelgeschalteten Funktionsmodulen im Umrichterbereich die Nennleistung eingehalten werden, wenn auf eine wünschenswerte, aber nicht unbedingt erforderliche Anforderung des Netzbetreibers verzichtet wird (zum Beispiel cos phi-Kompensation), und/oder die zulässige Außentemperatur unterhalb eines Grenzwertes (z.B. 15°C, um den Umrichter besonders wirkungsvoll zu kühlen) liegt und/oder der Drehzahlbereich des Generators eingeschränkt wird (z.B. +- 10% Drehzahlbereich statt +-30% im Normalbetrieb (um die erforderliche Frequenzanpassung durch den Umrichter zu begrenzen)

Die oben beschriebene Ausgestaltungsmöglichkeit der Erfindung bietet den Vorteil, dass trotz Auftreten einer Betriebsstörung durch entsprechende Modifikation der Bereichsgrenzen der Umgebungs- und Anlagenparameter eine elektrische Leistungserzeugung erreicht wird, die vorzugsweise der Leistungserzeugung des Normalbetriebs der Anlage entspricht.

Hierbei ist es möglich, dass die Modifikation der Bereichsgrenzen nur zeitlich eingeschränkt zulässig ist, z.B. weil durch eine höhere mechanische oder thermische Belastung die Lebensdauer einer Komponente durch längerfristigen Betrieb verkürzt wird. Die Erfindung sieht vor, dass derartige zeitliche Begrenzungen in den temporären Auslegungsparametern enthalten sein können, und die Steuerung die Anlage bei Überschreitung des Grenzwertes abschaltet oder die Leistung der Anlage reduziert.

In einer weiteren Ausführungsform kann der Betriebsführungsrechner so programmiert sein, dass er so lange auf die Temporär-Auslegungsparameter zugreift, bis ein Normalbetrieb der Anlage wiederhergestellt ist.

Die oben beschriebenen Ausgestaltungen ermöglichen einen kontinuierlichen Betrieb einer Windenergieanlage, wobei dies im wesentlichen durch eine redundante Ausführung der Komponenten, Module oder Systemeinheiten des elektrischen Systems erreicht wird.

Da bei dem elektrischen System, insbesondere durch Überwachungs- und Steuerungseinrichtungen, die Komponenten, Module und Systemeinheiten ein stark vernetztes System darstellen, erfordert die redundante Ausführung von Komponenten, Modulen und Systemeinheiten einen mit deren Anzahl überproportional ansteigenden Aufwand an Verbindungsleitungen und Umschalteinrichtungen. Weiterhin besteht bei elektrischen Systemen die Gefahr, dass z.B. ein elektrischer Kurzschluss in einer Komponente über die Verbindungsleitungen zu Folgeschäden bei anderen Komponenten führt.

In einer vorteilhaften Ausgestaltung der Erfindung kann daher die Verbindung zwischen mindestens zwei der redundant ausgeführten Komponenten und/oder Modulen und/oder Systemeinheiten ausschließlich oder teilweise, mittels mindestens einem Bussystems erfolgen. In einer besonders vorteilhaften Ausführungsform sind, durch entsprechende Wahl des physikalischen Übertragungsmediums (z.B. optisch mit Lichtwellenleitern), die angeschlossenen Komponenten zusätzlich galvanisch entkoppelt. In einer besonders vorteilhaften Ausgestaltung können auch die Verbindungsleitungen des Bussystems redundant ausgelegt sein

Ein Bussystem besteht aus Busteilnehmern (z.B. Busaktoren, Bussensoren, Betriebsführungsrechner), einem Übertragungsmedium (z.B. Buskabel oder drahtlose Verbindungen) sowie einer besonderen Software, die auf einem der Busteilnehmern, in der Regel dem Betriebsführungsrechner, installiert ist. Die Busteilnehmer besitzen spezielle Busanschaltbaugruppen, die die Kopplung zum Bus vornehmen und die reibungslose Kommunikation auf dem Bus sicherstellen. Die Busanschaltbaugruppen bestehen aus einem Prozessor (Controller), einer Software sowie einer "Transceiver" genannten Ankopplungseinheit, welche die Umsetzung der Signale auf das Transportmedium durchführt. Die Bussensoren sind die sensorischen Komponenten der Windenergieanlage, die unter anderem zur Überwachung von Komponenten eingesetzt werden, während die Busaktoren die Komponenten und Funktionsmodule darstellen, über die Befehle ausführbar sind. Das Transportmedium kann hierbei konventionell als Drahtkabel, oder über optische Fasern realisiert werden. Die optische Ausführung bietet beim Einsatz in einer Windenergieanlage den Vorteil der EMV-Festigkeit (elektromagnetische Verträglichkeit) und Blitzschutzsicherheit, da Signalleitungen oft über große Strecken in der unmittelbarer Nähe von Leistungskabeln verlegt werden müssen.

Die erfindungsgemäßen Ausführung des Bussystems erstreckt sich auf jegliche Art von Bussystemen, wie z.B.: CAN-Bus, insbesondere CANopen-Bus, Ethernet, Profibus DP/FMS, Interbus, TTP, FlexRay.

Vorteilhafter Weise dient das Bussystem sowohl zur Übertragung aller für die Steuerung und Betriebsführung erforderlichen Signale, als auch zur Überwachung und Aktivierung der erfindungsgemäßen redundanten Ausführungsform. Selbstverständlich umfasst die Erfindung aber auch Ausführungen, bei der die Signalübertragung für Steuerung und Betriebsführung vollständig von der Signalübertragung zur Überwachung und Aktivierung redundanter Module getrennt ist.

Die vorteilhafte Ausgestaltung der Erfindung bietet somit die Möglichkeit, dass insbesondere über einen entsprechend programmierten Betriebsführungsrechner der Defekt einer Komponente/Moduls/Systemeinheit mittels des Bussystems erkannt wird und daraufhin die Ersatzkomponente ohne Umschaltung von Verbindungsleitungen zur Signalübertragung aktiviert wird, so dass der Betrieb der Anlage aufrecht erhalten wird. Vorstellbar wäre aber auch hierfür eine zusätzliche Überwachungseinrichtung vorzusehehen.

Je nach Art der Komponente/Moduls/Systemeinheit kann es jedoch erforderlich sein, zusätzliche Verbindungsleitungen zur Übertragung des Leistungsflusses zu schalten.

Vorzugsweise wird hierbei das Bussystem in einer netzwerkartigen Struktur realsiert, so das alle wesentlichen Funktionsmodule auch bei Ausfall einzelner Verbindungswege miteinander kommunizieren können. Jedes wesentliche Funktionsmodul muss dann als Busteilnehmer ausgeführt werden, die dadurch entstehenden Mehrkosten werden jedoch durch die höhere Zuverlässigkeit der Leistungserzeugung kompensiert.

Eine vorteilhafte Weiterbildung der Erfindung sieht vor, neben dem Betriebsführungsrechner weitere intelligente Busteilnehmer einzusetzen. Dies kann entweder über zusätzliche intelligente Verknüpfungsstellen erfolgen, oder durch einzelne, am Bussystem angeschlossene Funktionsmodule, die mit eigenen "intelligenten" Mikroprozessoren versehen werden. Diese allgemein intelligente Busfunktionsmodule genannten Busteilnehmer werden so programmiert, dass sie individuelle Aufgaben erfüllen. Z.B. wird so die selbstständige Überwachung eines Teils des Bussystems und der angeschlossenen Komponenten von dem intelligenten Busfunktionsmodul übernommen und bei Ausfällen Maßnahmen zur Umschaltung auf Parallelmodule eingeleitet (Intelligentes Bussystem).

Besondere Zuverlässigkeit erzielt man z. B. durch den Einsatz eines fehlertoleranten -Bussystems, der z.B. im Falle eines Fehlers in einem Busteilnehmer oder der Unterbrechung einer Verbindungsleitung eine Rekonfiguration des gesamten Netzwerks vornimmt und somit den Funktionsausfall des kompletten Bussystems verhindert.

Der Einsatz eines intelligenten Bussystems bietet somit einerseits den Vorteil, dass Fehler automatisch erkannt und behoben werden können, ohne dass hierfür Kapazitäten des Steuerungsrechner erforderlich sind, andererseits muss bei einem Ausfall bei einem intelligenten Bussystem mit mehreren intelligenten Verteilerstellen nur ein deutlich kleinerer Teil des Bussystems abgeschaltet werden als bei einem Systems, welches nur ein intelligentes Busfunktionsmodul (in der Regel den Betriebsführungsrechner) enthält.

In einer weiteren vorteilhaften Ausgestaltung der Erfindung kann das mindestens eine Rotorblatt so an dem Rotor angeordnet sein, dass seine Winkelstellung zu dem Rotor einstellbar ist. Diese Ausgestaltung bietet den Vorteil, dass eine Energieaufnahme des Rotors aus dem Wind durch Änderung der Winkelstellung regelbar ist, so dass die elektrische Leistungserzeugung auch bei starkem Wind aufrechterhalten werden kann, ohne dass die Anlage zu stark belastet wird. Weiterhin kann über die Verstellung der Rotorblattwinkel die Leistungserzeugung so geregelt werden, dass sie den Anforderungen des elektrischen Netz entspricht.

In einer besonders vorteilhaften Ausgestaltung der Erfindung kann die Windenergieanlage so ausgebildet sein, dass das elektrische System als weitere Systemeinheit ein Blattverstellsystem umfasst, über das die Winkelstellung des oder der Rotorblätter geregelt wird.

Eine weitere vorteilhafte Ausgestaltung der Erfindung sieht vor, dass die Einrichtung zur Kopplung des Generators an das elektrische Netz dergestalt ausgebildet ist, dass der Generator mit mindestens zwei unterschiedlichen Drehzahlen am Netz betrieben werden kann, wobei die Einrichtung in einer besonders vorteilhaften Ausgestaltung der Erfmdung so ausgebildet ist, dass der Generator in einem variablen Drehzahlbereich betreibbar ist.

Hierbei ist sowohl an Kopplungseinrichtungen für polumschaltbare Generatoren gedacht, als auch an Kopplungseinrichtungen, die mittels elektromechanischer, elektrischer oder elektronischer Komponenten einen durch eine obere und eine untere Drehzahlgrenze begrenzten Drehzahlbereich aufweisen, wobei die untere Drehzahlgrenze auch 0 Umdrehungen/min sein kann, zwischen denen die Generatordrehzahl variiert werden kann.

Weiterhin sieht eine vorteilhafte Ausführungsform der Erfindung ein Umrichtersystem vor, bei dem die Anpassung des vom Generator erzeugten elektrischen Stroms an die Gegebenheiten des elektrischen Netzes über mehrere aktive Schalter, z.B. Thyristoren, GTO's, IGCT's oder IGBT's erfolgen kann.

Dabei können die aktiven Schalter gemäß weiterer vorteilhafter Ausgestaltungsmöglichkeiten der Erfindung über eine in dem Umrichtersystem angeordnete Umrichtersteuerungseinrichtung betätigt werden, die beispielsweise mit der Steuerungseinrichtung gekoppelt ist.

Gemäß einer erfindungsgemäßen Ausgestaltung kann ein Funktionsmodul so ausgebildet sein, dass es mindestens die aktiven Schalter bzw. einen Teil der aktiven Schalter des Umrichtersystems umfasst. Es besteht aber auch die Möglichkeit, mehrere Funktionsmodule vorzusehen, die aktive Schalter entsprechend ihrer Schaltaufgaben umfassen.

Eine besonders bevorzugte Ausführungsform der Erfindung sieht den Einsatz eines Wechselstrom-Generators vor. Diese Generatoren zeichnen sich durch eine hohe Zuverlässigkeit sowie besondere Wirtschaftlichkeit aus.

Ein Umrichtersystem, das einen solchen Generator an das elektrische Netz koppelt, kann gemäß einem weiteren Ausgestaltungsbeispiel so ausgebildet sein, dass es einen maschinenseitigen Wechselrichter (Diodengleichrichter oder Wechselrichter mit aktiven Schaltern) aufweist, der mit dem Generator gekoppelt ist und einen Wechselstrom zumindest teilweise in einen Gleichstrom oder eine Gleichspannung umwandelt. Weiterhin kann das Umrichtersystem einen Gleichstromzwischenkreis bzw. einen Gleichspannungszwischenkreis, der einen maschinenseitigen Wechselrichter mit einem netzseitigen Wechselrichter verbindet, aufweisen. Dabei ist der netzseitige Wechselrichter mit dem Netz gekoppelt und hat die Aufgabe den über den maschinenseitigen Wechselrichter erzeugten Gleichstrom oder die erzeugte Gleichspannung in eine, an das elektrische Netz angepasste elektrische Leistung umzuwandeln. Zudem können in dem Umrichtersystem elektromechanische Schutzeinrichtungen zum Schutz der Anlage sowie Filter, die auf der Maschinenseite zum Beispiel die Spannungssteilheit begrenzen und auf der Netzseite die Netzqualität verbessern,vorgesehen sein.

Besonders vorteilhaft ist hierbei, den maschinenseitigen Wechselrichter mit aktiven Schaltern auszuführen, weil somit ein Leistungsfluss im Umrichtersysteme in beiden Richtungen ermöglicht wird und eine Blindleistung erzeugt werden kann. Hierdurch ist es möglich, die Erregung des Generators und die Blindleistungserzeugung zu beeinflussen, was eine besonders wirtschaftliche Auslegung des Generators ermöglicht

In einer besonders bevorzugten Ausgestaltung der Erfindung kann ein Funktionsmodul so ausgebildet sein, dass es mindestens den maschinenseitigen Wechselrichter, den Gleichstrom bzw. den Gleichspannungszwischenkreis sowie den netzseitigen Wechselrichter umfasst. In das Funktionsmodul können aber weitere Bauteile aufgenommen sein, wie zum Beispiel die elektrotechnischen Schutzeinrichtungen oder die Filter.

Diese Anordnung ist deshalb von großem Vorteil, weil so auf einfache Weise existierende Umrichtersysteme zu Systemen sehr großer Leistung zusammengeschaltet werden können, wodurch insbesondere bei dem rasanten Wachstum der Größe von Windenergieanlagen die Entwicklungszeiten verkürzt werden.

Eine sehr vorteilhafte Ausgestaltung der Erfindung sieht es nun vor, zu den genannten Ausführungsformen der Funktionsmodule des Umrichtersystems mindestens ein Parallelmodul vorzusehen, wobei Funktions- und Parallelmodul über trennbare Verbindungen direkt oder indirekt mit dem Generator sowie direkt oder indirekt (z.B. über eine dazwischengeschaltete Transformatoreinheit) mit dem elektrischen Netz verbunden sind.

Dieser besonders vorteilhaften Ausführungsform der Erfindung liegt die Erkenntnis zugrunde, dass die aktiven Schalter eines Umrichtersystems besonders störanfällige Bauteile sind. Aufgrund ihrer Vielzahl bietet die erfindungsgemäße Einbindung der aktiven Schalter über Funktionsmodule in das elektrische System eine einfache und effektive Möglichkeit, im Falle eines Schadens das ausgefallene Modul durch Öffnen der trennbaren Verbindungen zu isolieren, und so die Leistungserzeugung mithilfe der verbleibenden funktionsfähigen Funktions- und Parallelmodule ganz oder zumindest eingeschränkt aufrecht zu erhalten.

Die vorzugsweise vollständige Isolierung des ausgefallenen Funktionsmoduls ist deshalb von Wichtigkeit, weil sonst die Gefahr besteht, das z.B. durch einen Kurzschluss im ausgefallenen Funktionsmodul benachbarte Module geschädigt werden.

Eine vorteilhafte Ausgestaltungsform der Erfindung sieht es vor, dass die trennbaren Verbindungen durch Schaltelemente realisiert werden. Diese Ausgestaltung bietet unter anderem den Vorteil, dass das Öffnen der trennbaren Verbindung auch von gering qualifiziertem Personal zum Beispiel manuell durchgeführt werden kann, da keine spezielle elektrotechnischen Vorkenntnisse erforderlich sind, solange die Schaltelemente eindeutig gekennzeichnet sind.

Besonders vorteilhaft, insbesondere für geplante Offshore-Anlagen ist eine erfmdungsgemäße Weiterbildung der Erfindung, bei der die Schaltelemente durch das Femüberwachungssystem schaltbar sind. In diesem Fall ist überhaupt kein Techniker vor Ort erforderlich, um nach einer Betriebsstörung eines Funktionsmoduls die Leistungserzeugung zumindest teilweise aufrecht erhalten zu können.

In weiteren vorteilhaften Ausgestaltungen können die Schaltelemente auch automatisch beispielsweise über die Steuerungseinrichtung und/ oder die Fernüberwachung betätigt werden.

Eine weitere, sehr vorteilhafte Ausgestaltung der Erfindung sieht vor, dass mindestens eine trennbare Verbindung zwei in Reihe geschaltete Schaltelemente aufweist, von denen eines ein Leistungsschalter und das andere ein Schütz oder ein aktiver Schalter (z. B. ein Thyristor) ist. Hintergrund dieser Erfindung ist die Erkenntnis, dass ein Leistungsschalter zusätzlich zur gewünschten Schaltfunktion auch noch eine Sicherheitsfunktion ausübt, da er durch Überlastung bei einem Grenzstrom auslöst. Andererseits ist ein Leistungsschalter nur für eine sehr begrenzte Anzahl von Schaltspielen geeignet, so dass häufige Schaltspiele von dem in Reihe liegenden Schütz übernommen werden, welches seinerseits aber keine Sicherheitsfunktion bietet. Somit wird auf einfache und effektive Weise eine Anordnung von Funktionsmodul und Parallelmodul mit ähnlicher Funktion geschaffen, bei der bei einer Funktionsstörung des einen Moduls das andere Modul die Funktion nahezu vollständig übernimmt.

Weitere Merkmale, Aspekte und Vorteile der vorliegenden Erfindung werden zum Teil durch die nachfolgende Beschreibung offenbart und sind zum Teil durch die Beschreibung nahegelegt oder ergeben sich bei der praktischen Verwendung der Erfindung. Eine Ausführungsform der Erfindung wird nachfolgend hinreichend im Detail beschrieben. Es versteht sich, dass andere Ausführungsformen verwendet werden und Änderungen gemacht werden können, ohne den Bereich der Erfindung zu verlassen. Die folgende ausführliche Beschreibung ist daher nicht in einem beschränkten Sinn zu sehen, und der Bereich der vorliegenden Erfindung ist am besten durch die anhängenden Ansprüche definiert.

Im folgenden soll die vorliegende Erfindung anhand eines Ausführungsbeispiel erläutert werden. Es zeigt:
- Fig 1: einerfindungsgemäßes elektrisches System einer Windenergieanlage.
- Fig 2: eine erfindungsgemäße redundante Steuerungseinrichtungen einer Windenergieanlage

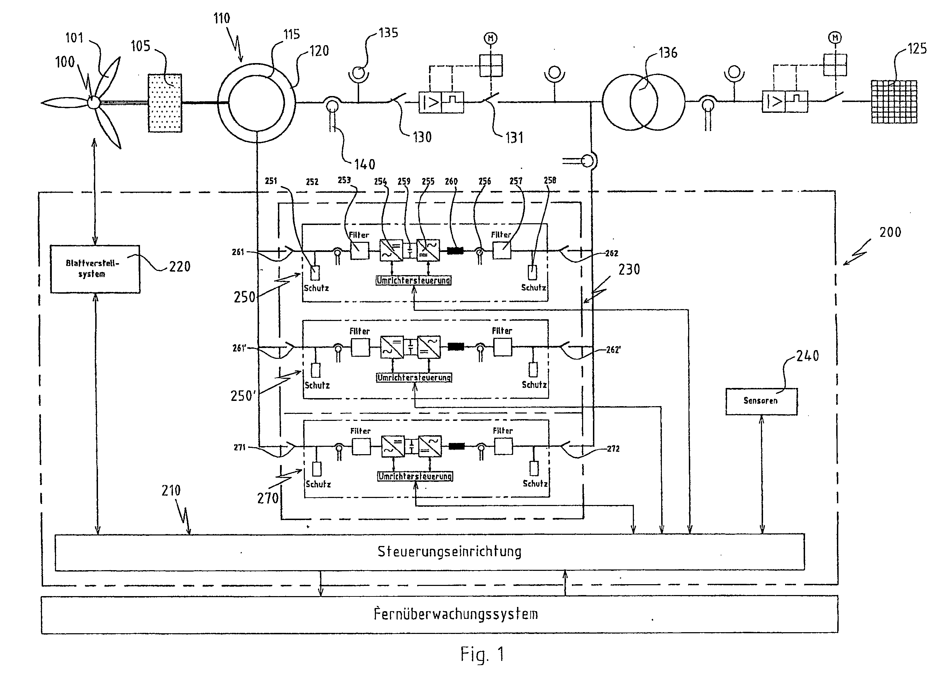

Die Fig 1 zeigt einen Rotor 100 mit winkelverstellbaren Rotorblättern 101 einer Windenergieanlage, der über Wind in eine Drehbewegung versetzbar ist. Der Rotor 100 ist über ein Getriebe 105 mit einem Generator 110 verbunden und erzeugt durch die Drehbewegung des Rotors eine elektrische Leistung.

Der Generator 110 weist einen Generatorrotor 115 und einen Generatorstator 120 auf, wobei der Generatorstator 120 über mindestens einen Transformator 136 mit einem elektrischen Netz 125 gekoppelt ist. Zwischen dem Generatorstator 120 und dem elektrischen Netz 125 ist ein Schaltelement 130 (z.B. Schütz oder aktiver Schalter, wie IGBT oder Thyristorschalter oder ähnliches) und ein Leistungsschalter 131 oder ähnliches in Reihe angeordnet, die im geschlossenen Zustand den Generator 110 mit dem elektrischen Netz 125 verbinden. Im Bedarfsfall, zum Beispiel wenn der Betreiber des elektrischen Netz 125 dies fordert, kann durch Öffnen der Schalter der Generator 110 vom elektrischen Netz 125 abgekoppelt werden.

Zur Überwachung der erzeugten elektrischen Leistung zwischen dem Generator 110 und dem elektrischen Netz 125 ist weiterhin eine Einrichtung zur Messung der elektrischen Spannung 135 sowie eine Einrichtung zur Messung des elektrischen Stroms 140 angeordnet.

Der Generatorrotor 120 ist mit einem elektrischen System 200 gekoppelt. Das dargestellte elektrische System 200 umfasst folgende elektrische Systemeinheiten: eine Steuerungseinrichtung 210, ein Blattverstellsystem 220 sowie ein Umrichtersystem 230.

Über die Steuerungseinrichtung 210 erfolgt die Regelung sowie die Betriebsführung der Windenergieanlage. Daher ist die Steuerungseinrichtung 210 mit den anderen Systemeinheiten des elektrischen Systems 200 gekoppelt und kann deren Funktionsweise dergestalt Regeln und Steuern um eine optimale Leistungserzeugung zu erreichen, die zusätzlich den Netzanforderungen des Betreibers eines elektrischen Netz 125 genügt. Der Steuerungseinrichtung 210 werden alle wesentlichen Parameter, wie zum Beispiel Umgebungs- und Anlagenparameter zugeführt. Bei Umgebungsparametern kann es sich beispielsweise um, die Umgebung der Anlage betreffende Messdaten, wie zum Beispiel Luftdruck, Lufttemperatur oder Windgeschwindigkeit handeln, die mittels Sensoren 240 gemessen werden. Bei Anlagenparametern handelt es sich um Messgrössen, die den Betrieb der Anlage betreffen, die unter anderem über Messeinrichtungen wie beispielsweise die Einrichtung zur Messung der elektrischen Spannung 135 und die Einrichtung zur Messung der elektrischen Strom 140 erfasst werden können.

In dem dargestellten Ausführungsbeispiel ist die Steuerungseinrichtung 210 mit einem Femüberwachungssystem gekoppelt, wobei das Femüberwachungssystem an einem beliebigen Ort angeordnet sein kann. Mit Fernüberwachungssystem kann ein ortsunabhängiges Überwachungssystem und/ oder eine Einrichtung zur Parksteuerung gemeint sein.

Neben den dargestellten Systemeinheiten 220, 230 steuert die Steuerungseinrichtung 210 üblicherweise auch eine Vielzahl von Hilfssystemen wie z.B. Windnachführung, Kühlsysteme und Ölversorgung etc., die aber aus Übersichtlichkeitsgründen nicht dargestellt sind.

Über das Blattverstellsystem 220 kann die Einstellung des Winkels der Rotorblätter 101 zu dem Rotor 100 geregelt werden. Die Regelung der Winkelstellung der Rotorblätter erfolgt über die Steuerungseinrichtung 210, die auf das Blattverstellsystem zugreift. Über die Regelung der Winkelstellung ist unter anderem eine optimale Leistungserzeugung der Windenergieanlage einstellbar. Weiterhin kann darüber aber auch ein Abschalten der Anlage erreicht werden, indem die Rotorblätter in die sogenannte Fahnenstellung gedreht werden. Mit Fahnenstellung wird allgemein das Herausdrehen der Rotorblätter 101 aus dem Wind bezeichnet, so dass, wie bei einer Fahne, dem Wind nur eine minimale Angriffsfläche geboten wird.

In dem dargestellten Ausführungsbeispiel erfolgt die Regelung der, über den Generator erzeugten Leistung in eine, den Netzanforderungen des Betreibers eines elektrischen Netz entsprechende Leistung über einen sogenannten "doppelt-gespeisten" Asynchrongenerator.

Dabei wird ein Großteil der erzeugten Leistung über den Generatorstator 120 abgenommen. Ein kleinerer Teil der erzeugten Leistung wird über den Generatorrotor 115 in ein Umrichtersystem 230 geführt und dann gemeinsam mit der Statorleistung in das elektrische Netz 125 eingespeist. Die, über den Generatorrotor 115 "abgezweigte" Leistung wird über das Umrichtersystem 230 dergestalt umgerichtet, dass die in das Netz eingespeiste Leistung den Netzanforderungen entspricht.

Bekannte Umrichtersysteme für den doppelt-gespeisten Betrieb einer Windenergieanlage weisen im allgemeinen einen maschinenseitigen Wechselrichter auf, der mit dem Generatorrotor gekoppelt ist, sowie einen netzseitigen Wechselrichter, der mit dem elektrischen Netz gekoppelt ist. Je nach Betriebsform werden der maschinenseitige und der netzseitige Wechselrichter über ein Gleichspannungszwischenkreis oder einen Gleichstromzwischenkreis verbunden. Weiterhin weisen bekannte Umrichtersysteme maschinen- und netzseitige Schutzeinrichtungen sowie Filter auf.

Das dargestellte Umrichtersystem 230 zeigt eine vorteilhafte, erfmdungsgemäße Ausführung eines Umrichtersystems.

In dem dargestellten Umrichtersystem 230 ist vorgesehen, ein bekanntes Umrichtersystem so weiterzubilden, dass die oben beschriebenen bekannten Teile in ein Funktionsmodul 250 zusammengefasst werden. Das Funktionsmodul 250 umfasst die folgenden Komponenten: eine maschinenseitige Schutzeinrichtung 251 (zum Beispiel Crowbar, Blitzschutz und/ oder Überspannungsschutz), eine Strommesseinrichtung 252, einen maschinenseitigen Filter 253 sowie einen maschinenseitigen Wechselrichter 254. Weiterhin umfasst das Funktionsmodul 250 die Bauteile: netzseitiger Wechselrichter 255, Netzdrossel 260, netzseitige Strommesseinrichtung 256, netzseitigen Filter 257 und netzseitige Schutzeinrichtung 258, wobei der maschinenseitige Wechselrichter und der netzseitige Wechselrichter über einen Gleichspannungszwischenkreis 259 verbunden sind.

Das Umrichtersystem ist vorteilhaft so ausgebildet, dass zu dem Funktionsmodul ein zweites Funktionsfunktionsmodul vorgesehen ist, wobei beide so dimensionert sind, dass sie die über den Generatorrotor 115 abgeführte Leistung zu gleichen Teilen umrichten können. Diese Ausführung bietet den Vorteil, dass bei Ausfall eines Funktionsmoduls, die Rotorleistung zumindest teilweise weiter umrichtbar ist und somit die Anlage weiterhin, wenn auch bzgl der maximalen Leistung eingeschränkt betriebsbereit ist.

In einer weiteren vorteilhaften Ausführung weist das dargestellte Umrichtersystem 230 ein Parallelmodul 270 auf, dass in dem Beispiel identisch zu den Funktionsmodulen 250 und 250' ausgebildet ist.

Das Parallelmodul 270 ist so in das Umrichtersystem 230 eingebunden, dass es bei Ausfall eines Funktionsmoduls 250, 250' dessen Funktion übernehmen kann. Somit ist auch bei Ausfall eines Funktionsmoduls 250, 250' sichergestellt, dass die Leistungserzeugung vollständig aufrecht erhalten werden kann.

Die Funktionsmodul 250 und 250' sind über maschinenseitige Schalter 261, 261' als auch über netzseitige Schalter 262, 262' von dem elektrischen System 200 trennbar. Gleiches gilt für das Parallelmodul 270, das über den maschinenseitigen Schalter 271 sowie den netzseitigen Schalter 272 von dem elektrischen System trennbar ist.

Im Normalbetrieb wird durch Schließen der Schalter 261, 261', 262, 262' die Rotorleistung über die Funktionsmodule 250 und 250' umgerichtet und das Parallelmodul 270 ist vom elektrischen System 200 durch die geöffneten Schalter 271, 272 isoliert. Bei Ausfall eines Funktionsmoduls 250, 250' wird durch Öffnen der entsprechenden Schalter des defekten Funktionsmodul vom elektrischen System isoliert und die Schalter 271, 272 geschlossen und somit das Parallelmodul 270 in das elektrische System 200 integriert, so das die Rotorleistung über das funktionsfähige Funktionsmodul 250, 250' und das Parallelmodul 270 umgerichtet wird.

In den Funktionsmodulen 250 und 250' sowie dem Parallelmodul 270 ist weiterhin eine Umrichtersteuerung, über die die Steuerung der Wechselrichter erfolgt, wobei die Umrichtersteuerung wiederum mit der Steuerungseinrichtung 210 gekoppelt ist. Grundsätzlich kann die Umrichtersteuerung auch direkt in der Steuerungseinrichtung integriert sein oder zentral in einer Einheit zusammengefasst sein, die den gesamten Umrichter steuert (anstatt der dezentralen dargestellten Aufteilung in den einzelnen Modulen).

In der Fig 1 sind nur die für die Erläuterung des Ausführungsbeispiel wesentlichen Bauteile dargestellt worden. Weitere für den Aufbau und den Betrieb wesentliche Bauteile wie z.B. Sicherungen oder der detaillierterer Aufbau der Crowbar sind aus Übersichtlichkeitsgründen nicht dargestellt worden.

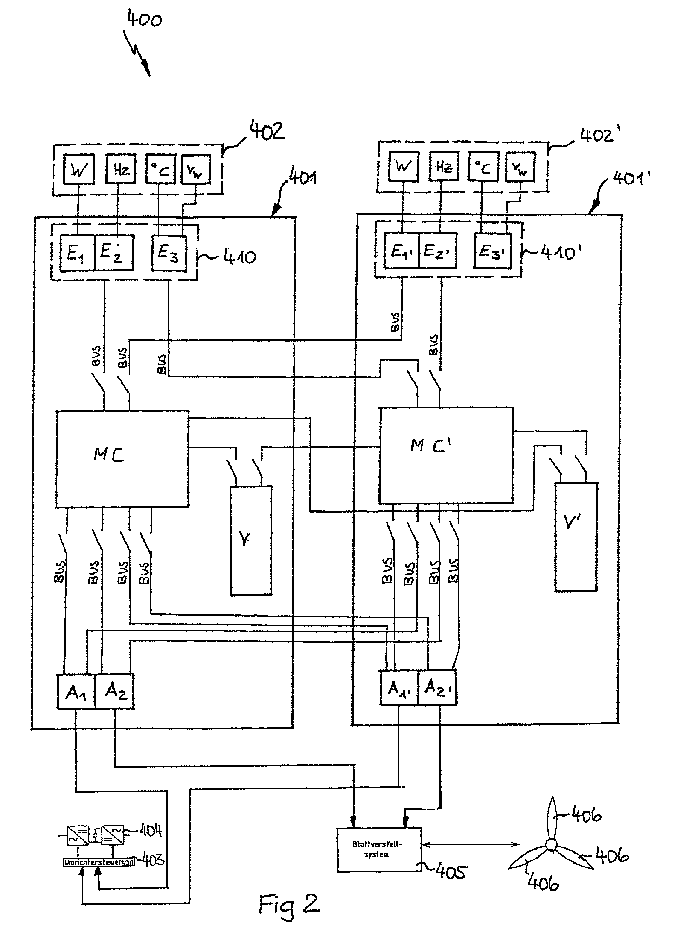

In der Fig 2 ist ein Ausführungsbeispiel für die redundante Auslegung einer Steuerungseinrichtung dargestellt.

Die in Fig 2 dargestellte redundante Steuerungseinrichtung 400 umfasst zwei Schaltschränke 401 und 401'. In den Schaltschränken 401 und 401' sind jeweils ein als Microcontroller ausgeführter Betriebsführungsrechner MC und MC' angeordnet. Die beiden Betriebsführungsrechner MC und MC' werden jeweils über eine Versorgung V und V' mit elektrischer Energie versorgt.

Weiterhin umfasst die redundante Steuerungseinrichtung 400 ein Funktionsmodul "Sensorik" 402 zu dem ein Parallelmodul "Sensorik" 402' vorgesehen ist. In den Sensorik-Modulen 402 und 402' sind Einrichtungen zusammengefasst, über die für den Betrieb der Anlage erforderliche Meßdaten erfassbar sind.

In dem dargestellten Ausführungsbeispiel sind in den Sensorik-Modulen zum Beispiel eine Meßeinrichtung W zur Erfassung der erzeugten der elektrischen Leistung, eine Meßeinrichtung Hz zur Erfassung der Frequenz, sowie Meßeinrichtungen °C und v_{W} zur Erfassung von z. B der Umgebungstemperatur und der Windgeschwindigkeit. Üblicher Weise besitzen heutige Windenergieanlagen mindestens 50 bis 100 unterschiedliche Sensoren, so dass es sich hier um ein stark vereinfachtes Beispiel zur Illustration handelt. Es ist durchaus auch denkbar, weitere oder andere sensorische Komponenten in diesem Funktionsmodul oder in einem weiteren Funktionsmodul zusammenzufassen und entsprechende Parallelmodule vorzusehen, wobei die Parallelmodule gemäß der vorliegenden Erfindung durchaus auch so ausgebildet sein können, dass sie nicht die gleichen Funktionen wie das Funktionsmodul sondern lediglich ähnliche Funktionen ausführen, wodurch aber eine gleiche, ähnliche oder zumindest betriebserhaltene Funktion durchgeführt werden kann.

Die redundante Steuerungseinrichtung 400 umfasst ferner in dem Schaltschrank 401 angeordnete Eingänge E₁, E₂ und E₃ sowie die Ausgänge A₁ und A₂. Die Eingänge E₁, E₂ und E₃ sind in dem dargestellten Ausführungsbeispiel zu einem Funktionsmodul 410 zusammengefasst, wobei die Eingänge E₁ und E₂ jeweils mit den Komponenten W und Hz des Sensorik-Moduls 402 und der Eingang E₃ mit den Komponente °C und v_{W} verbunden sind. In dem Schaltschrank 401' sind entsprechend die Eingänge E_{1'}, E_{2'} und E_{3'} und Ausgänge A_{1'}, und A_{'2} angeordnet und mit dem Sensorikmodul 402' verbunden, wobei die Eingänge E_{1'}, E_{2'} und E_{3'} zu einem Parallelmodul 410' zusammengefaßt sind.

Die Ausgänge A₁ und A_{1'} sind jeweils mit einer Umrichtersteuerung 403 verbunden. Die Umrichtersteuerung 403 hat die Aufgabe den Umrichter 404 dergestalt zu steuern, dass eine elektrische Leistung erzeugt wird, welche einerseits über das eingestellte Drehmoment die Rotordrehzahl im Sollbereich regelt und andererseits den Anforderungen des öffentlichen elektrische Netzes entspricht. Demgegenüber sind die Ausgänge A₂ und A_{2'} mit einem Blattverstellsystem 405 verbunden, über das die Winkelverstellung der Rotorblätter 406 zur Einstellung einer geforderten elektrischen Leistung.

In den Schaltschränken 401 und 401' sind die beiden Betriebsführungsrechner MC und MC' über ein Bussystem jeweils mit den Eingangs-Funktionsmodulen 410 und 410', den beiden Versorgungen V und V' und den Ausgängen A₁, A_{1'}, A₂ und A_{2'}verbunden.

Durch das beschriebene Ausführungsbeispiel für eine redundante Steuerungseinrichtung wird ermöglicht, dass bei Ausfall einer Komponente oder eines Funktionsmoduls die entsprechende Ersatzkomponente oder das entsprechende Parallelmodul aktiviert werden kann.

Fällt zum Beispiel eine Komponente des Sensorik-Funktionsmoduls 402 oder sogar das komplette Modul aus, so kann der Betriebesführungsrechner MC durch Umschalten der Busleitung auf das Sensorik-Parallelmodul 402' zugreifen. Tritt zusätzlich noch der Defekt auf, dass die Zuleitung zwischen dem MC und dem Ausgang A₁ ausfällt, dann kann der Betriebsführongsrechner MC durch Umschalten der Busleitung über den Ausgang A_{1'} auf die Umrichtersteuerung zugreifen. Ähnliches gilt, wenn z. B. die Versorgung V des Betriebsführungsrechners MC ausfällt. In diesem Fall bestünde dann zum einen die Möglichkeit, dass die Versorgung V' die Versorgung des Betriebsführungsrechners MC übernimmt oder aber, dass der Betriebsführungsrechner MC' aktiviert wird.

Das redundante Steuerungssystem des vorliegenden Ausführungsbeispiels ist somit so ausgestaltet, dass bei einem Ausfall oder Defekt einer Komponente oder eines Funktionsmoduls immer die Möglichkeit besteht, auf einen Ersatzbetrieb umzuschalten, um somit den Betrieb der Windenergieanlage, evtl. auch eingeschränkt aufrecht zu erhalten.

## Patentansprüche

1. Windenergieanlage mit einem Rotor (100) mit mindestens einem Rotorblatt (101), der direkt oder indirekt mit einem Generator (110), zur elektrischen Leistungserzeugung gekoppelt ist, und einem elektrischen System (200), bestehend aus unterschiedlichen elektrischen Systemeinheiten (210, 220, 230, 400), die elektronische, elektrische und/ oder elektromechanische, und/oder sensorische Komponenten und/ oder elektrotechnische Schutzeinrichtungen aufweisen, wobei die elektrischen Systemeinheiten (210, 220, 230, 400) mindestens umfassen eine Einrichtung zur Kopplung des Generators (230) an ein elektrisches Stromnetz (125), und alle Komponenten einer elektrischen Systemeinheit Systemeinheiten (210, 220, 230, 400) oder bestimmte Komponenten der elektrischen Systemeinheit (210, 220, 230, 400) entsprechend ihrer Aufgaben in ein oder mehrere Funktionsmodule (250, 250', 410) zusammengefasst sind, die mindestens eine Funktion in Verbindung mit der elektrischen Leistungserzeugung ausführen, wobei zu mindestens einem Funktionsmodul (250, 250', 410) mindestens ein Parallelmodul (270, 410') vorgesehen ist, das bei Normalbetrieb der Anlage eine gleiche oder ähnliche Funktion des Funktionsmodul (250, 250', 410) ausführt oder ausführen kann, und wobei Funktionsmodul (250, 250', 410) und Parallelmodul (270, 410') dergestalt miteinander verbunden oder verbindbar sind, dass bei einer Betriebsstörung, bei der ein Funktionsmodul (250, 250', 410) oder ein Parallelmodul (270, 410') ausfällt, das verbleibende funktionsfähige Funktions- oder Parallelmodul (250, 250', 270, 410, 410') zumindest teilweise die elektrische Leistungserzeugung aufrecht erhält **dadurch gekennzeichnet, dass** die elektrischen systemeinheiten mindestens eine Steuewngeinrichtung (201, 400) mit einem Betrieboführungscechner umfassen, die unter anderem die elektrische leistungserreugung optimiert und Umgebungs- und Anlagenparameter der Steuerungseinrichtung (210) zugeführt werden und die Steuerungseinrichtung (210) mittels Umgebungs- und Anlagenparameter eine Betriebsführung der Anlage durchführt, wobei zulässige Bereichsgrenzen der Umgebungsparameter und Anlagenparameter über Auslegungsparameter definiert werden..

2. Windenergieanlage nach Anspruch 1, **dadurch gekennzeichnet, dass** das Parallelmodul so ausgebildet ist, dass es bei Ausfall des Funktionsmoduls (250, 250', 410) dessen Funktion vollständig übernimmt.

3. Windenergieanlage nach Anspruch 1, **dadurch gekennzeichnet, dass** sie mindestens zwei Funktionsmodule (250, 250', 410), die gleiche oder ähnliche Funktionen ausführen, sowie mindestens ein Parallelmodul (270, 410') aufweist, das bei Ausfall eines Funktionsmoduls (250, 250') dessen Funktion vorzugsweise vollständig übernimmt.

4. Windenergieanlage nach Anspruch 1, **dadurch gekennzeichnet, dass** die Steuerungseinrichtung (400) durch mindestens ein Versorgungsmodul (V, V') mit elektrischer Energie versorgt wird.

5. Windenergieanlage nach dem vorherigen Anspruch, **dadurch gekennzeichnet, dass** mindestens ein Versorgungsmodul (V, V') so ausgebildet ist, dass es unabhängig vom öffentlichen elektrischen Netz ist.

6. Windenergieanlage nach einem der vorherigen Ansprüche, **dadurch gekennzeichnet, dass** das elektrische System mindestens eine weitere Steuerungseinrichtung aufweist, wobei die erste Steuerungseinrichtung als Funktionsmodul und die zweite Steuerungseinrichtung als Parallelmodul ausgebildet ist.

7. Windenergieanlage nach Anspruch 1, **dadurch gekennzeichnet, dass** zu mindestens einer der elektronischen, elektrischen und/ oder elektromechanischen Komponenten mindestens eine Ersatzkomponente vorgesehen ist, wobei Komponenten und Ersatzkomponenten dergestalt miteinander verbunden sind, dass bei Ausfall einer Komponente die Ersatzkomponente deren Aufgabe übernimmt..

8. Windenergieanlage nach einem der vorherigen Ansprüche, **dadurch gekennzeichnet, dass** die Windenergieanlage über ein Femüberwachungssystem fernwartbar ist.

9. Windenergieanlage nach vorstehendem Anspruch, **dadurch gekennzeichnet, dass** das Fernüberwachungssystem so ausgebildet ist, dass es auf die Steuerungseinrichtung (210) zugreifen kann.

10. Windenergieanlage nach vorstehendem Anspruch, **dadurch gekennzeichnet, dass** das Femüberwachungssystem so ausgebildet ist, dass der Ausfall eines Funktionsmodul (250, 250') über das Femüberwachungssystem diagnostizierbar ist.

11. Windenergieanlage nach vorstehendem Anspruch, **dadurch gekennzeichnet, dass** das Fernüberwachungssystem so ausgebildet ist, dass die Fehlerbehebung über das Fernüberwachungssystem durchführbar ist.

12. Windenergieanlage nach Anspruch 1, **dadurch gekennzeichnet, dass** die Auslegungsparameter im Normalbetrieb im Betriebsführungsrechner hinterlegte Standard-Auslegungsparameter sind.

13. Windenergieanlage nach Anspruch 1, **dadurch gekennzeichnet, dass** der Betriebsführungsrechner bei einer Betriebsstörung auf Temporär-Auslegungsparameter zugreift, die im Betriebsführungsrechner hinterlegt und/ oder erzeugt und/ oder dem Betriebsführungsrechner zugeführt werden, über die an die Betriebsführung angepasste Temporär-Bereichsgrenzen für zulässige Umgebungsparameter und Anlagenparameter definiert werden, die eine Aufrechterhaltung der elektrischen Leistungserzeugung zumindest zeitweise ermöglichen.

14. Windenergieanlage nach einem der vorstehenden Ansprüche, **dadurch gekennzeichnet, dass** die temporären Bereichsgrenzen über das Femüberwachungssystem direkt in den Betriebsführungsrechner eingebbar sind.

15. Windenergieanlage nach Anspruch 13oder 14, **dadurch gekennzeichnet, dass** der Betriebsführungsrechner auf die Temporär-Auslegungsparameter bis zur Wiederherstellung des Normalbetriebs der Anlage zugreift.

16. Windenergieanlage nach einem der vorherigen Ansprüche, **dadurch gekennzeichnet, dass** mindestens zwei Komponenten / Funktions- und/ oder Parallelmodule (250, 250', 270)/ Systemeinheiten (210, 220, 230) mittels trennbarer Verbindungen miteinander verbunden sind.

17. Windenergieanlage nach einem der vorherigen Ansprüche, **dadurch gekennzeichnet, dass** mindestens zwei Komponenten / Funktions- und/ oder Parallelmodule (250, 250', 270)/ Systemeinheiten (210, 220, 230) mittels mindestens einem Bussystem miteinander verbunden sind, wobei das Bussystem mindestens umfasst Busteilnehmer, mindestens ein Übertragungsmedium sowie Software.

18. Windenergieanlage nach vorstehenden Anspruch **dadurch gekennzeichnet, dass** das Bussystem ringförmig oder als Netzstruktur ausgeführt ist.

19. Windenergieanlage nach Anspruch 17 oder 18, **dadurch gekennzeichnet, dass** mindestens ein Busteilnehmer einen Mikroprozessor aufweist, der so programmierbar ist, das er unter anderem die Funktionsfähigkeit mindestens einer Komponente, eines Funktions- oder Parallelmoduls (250, 250', 270) oder einer Systemeinheit (210, 220, 230) überwachen kann und bei Ausfall einer Komponente, eines Funktions- oder Parallelinoduls (250, 250', 270) oder einer Systemeinheit (210, 220, 230) auf eine Ersatzkomponente oder auf ein funktionsfähiges Funktions- oder Parallelmodul (250, 250', 270) oder eine funktionsfähige Systemeinheit (210, 220, 230) umschalten kann.

20. Windenergieanlage nach Anspruch 1, **dadurch gekennzeichnet, dass** das mindestens eine Rotorblatt (101) winkelverstellbar ausgebildet ist.

21. Windenergieanlage nach Anspruch 20, **dadurch gekennzeichnet, dass** die elektrischen Systemeinheiten (210, 220, 230) weiterhin umfassen ein Blattverstellsystem (220) zur Regelung der Winkelstellung des mindestens einen Rotorblatts (101).

22. Windenergieanlage nach einem der vorhergehenden Ansprüche, **dadurch gekennzeichnet, dass** die Einrichtung zur Kopplung des Generators (230) an das elektrische Netz (125) so ausgebildet ist, dass der Generator mit mindestens zwei verschiedenen Drehzahlen, vorzugsweise mit einem variablen Drehzahlbereich, am elektrischen Netz (125) betreibbar ist.

23. Windenergieanlage nach Anspruch 1, **dadurch gekennzeichnet, dass** die Einrichtung zur Kopplung des Generators an das elektrische Netz ein Umrichtersystem (230) ist, das mehrere aktive Schalter aufweist.

24. Windenergieanlage nach vorstehendem Anspruch, **dadurch gekennzeichnet, dass** das Umrichtersystem (230) mindestens eine Umrichtersteuerung aufweist, über die die aktiven Schalter betätigbar sind.

25. Windenergieanlage nach vorstehendem Anspruch, **dadurch gekennzeichnet, dass** die Umrichtersteuerung mit der Steuerungseinrichtung gekoppelt ist.

26. Windenergieanlage nach vorstehendem Anspruch, **dadurch gekennzeichnet, dass** mindestens ein Funktionsmodul (250, 250') so ausgebildet ist, dass es mindestens die aktiven Schalter des Umrichtersystems (230) zumindest teilweise umfasst.

27. Windenergieanlage nach einem der vorhergehenden Ansprüche, **dadurch gekennzeichnet, dass** über den Generator (110) ein Wechselstrom erzeugbar ist, das Umrichtersystem (230) mindestens einen maschinenseitigen Wechselrichter (254) aufweist, der mit dem Generator (110) gekoppelt ist und den Wechselstrom zumindest teilweise in einen Gleichstrom oder eine Gleichspannung umwandelt, das Umrichtersystem weiterhin einen Gleichstromzwischenkreis oder einen Gleichspannungszwischenkreis (259) aufweist, der den maschinenseitigen Wechselrichter (254) mit mindestens einem netzseitigen Wechselrichter (255), der mit dem elektrischen Netz (125) gekoppelt ist, verbindet, wobei der netzseitige Wechselrichter (255) den Gleichstrom oder die Gleichspannung in eine, an das elektrische Netz (125) angepassten elektrische Leistung umwandelt.

28. Windenergieanlage nach vorstehendem Anspruch, **dadurch gekennzeichnet, dass** der maschinenseitige Wechselrichter (254) aktive Schalter aufweist.

29. Windenergieanlage nach einem der vorhergehenden Ansprüche, **dadurch gekennzeichnet, dass** ein Funktionsmodul (250, 250') mindestens umfasst den maschinenseitigenseitigen Wechselrichter (254), den Gleichstromzwischenkreis bzw. den Gleichspannungszwischenkreis (259), sowie den netzseitigen Wechselrichter (255).

30. Windenergieanlage nach Anspruch 26 oder 29, **dadurch gekennzeichnet, dass** zu dem Funktionsmodul (250, 250') mindestens ein Parallelmodul (270) vorgesehen ist, wobei Funktions- und Parallelmodul über trennbare Verbindungen (261, 262, 216', 262', 271, 272) direkt oder indirekt mit dem Generator (110) und/oder direkt oder indirekt mit dem elektrischen Netz (125) verbunden sind.

31. Windenergieanlage nach vorstehendem Anspruch, **dadurch gekennzeichnet, dass** bei Ausfall eines Funktions- oder Parallelmoduls (250, 250', 270) durch Öffnen der trennbaren Verbindungen (261, 262, 216', 262', 271, 272) das ausgefallene Modul im elektrischen System isoliert wird.

32. Windenergieanlage nach Anspruch 30 oder 31, **dadurch gekennzeichnet, dass** die trennbaren Verbindungen (261, 262, 216', 262', 271, 272) mindestens ein Schaltelement enthalten.

33. Windenergieanlage nach vorstehendem Anspruch, **dadurch gekennzeichnet, dass** das Schaltelement manuell schaltbar ist.

34. Windenergieanlage nach einem der vorhergehenden Ansprüche, **dadurch gekennzeichnet, dass** das Schaltelement ferngesteuert schaltbar ist.

35. Windenergieanlage nach einem der vorhergehenden Ansprüche, **dadurch gekennzeichnet, dass** das Schaltelement automatisch über die Steuerungseinrichtung (210) bzw. das Fernüberwachungssystem schaltbar ist.

36. Windenergieanlage nach einem der vorhergehenden Ansprüche, **dadurch gekennzeichnet, dass** mindestens eine trennbare Verbindung (261, 262, 216', 262', 271, 272) zwei in Reihe geschaltete Schaltelemente aufweist, von denen eines ein Leistungsschalter und das andere ein Schütz ist.

## Claims

1. A wind-driven power-plant comprising a rotor (100) having at least one blade (101) and connected directly or indirectly to a generator (110) for generating electric power, further comprising an electrical assembly (200) made up of different sub-assemblies (210, 220, 230, 400) containing electronic, electrical and/or electromechanical and/or sensor components and/or electrotechnical safety elements, wherein the sub-assemblies comprise at least one device connecting the generator to an electrical network, and all elements/components or specific elements/components of an electric sub-assembly (210, 220, 230, 400) are combined according to their purposes into one or more function modules (250, 250', 410) that implement a function relating to electric power generation, at least one parallel module (270, 410') being associated with at least one function module (250, 250', 410) and in normal operation of said power-plant implementing as needed an identical or similar function as the function module (250, 250', 410), where the function module (250, 250', 410) and the parallel module (270, 410') are connected or connectable to each other in a manner that, in the event of operational malfunction during which one function module (250, 250', 410) or a parallel module (270, 410') fails, the remaining operative function module or parallel module (250, 250' 270, 410, 410') at least partly maintains power, **characterized in that** the electric sub-assembly comprises at least one control device (210, 400) to optimize among others the electric power generation, the control device (210, 400) including at least one operations managing computer, wherein parameters of ambience and power-plant are fed to the control device (210) which by means of said parameters operationally manages said power-plant, permissible ranges of said ambience and power-plant parameters being defined by design parameters.

2. The wind-driven power-plant as claimed in claim 1, wherein the parallel module is designed in a way that it fully assumes the function of the function module (250, 250', 410) when the latter fails.

3. The wind-driven power-plant as claimed in claim 1 wherein said wind-driven power-plant comprises at least two function modules (250, 250', 410) implementing identical or similar functions and furthermore at least one parallel module (270, 410') that preferably completely assumes the function of a function module (250, 250') when the latter fails.

4. The wind-driven power-plant as claimed in claim 1, wherein the electrical power feeding the control device (400) is obtained from at least one power source module (V, V').

5. The wind-driven power-plant as claimed in the preceding claim, wherein at least one power source module (V, V') is designed to be independent of a public electric network.

6. The wind-driven power-plant as claimed in any of the preceding claims, wherein the electrical assembly includes at least one more control device, the first control device being designed as a function module and the second control device as a parallel module.

7. The wind-driven power-plant as claimed in claim 1, wherein at least one of the electronic, electrical and/or electromechanical components is associated with a replacement component, where the electronic, electrical and/or electromechanical components and the replacement components are connected to each other in a manner that in the event of a electronic, electrical and/or electromechanical component failure, its task shall be assumed by the replacement component.

8. The wind-driven power-plant as claimed in the preceding claim, wherein maintenance of the wind-driven power-plant may be implemented at a distance from a remote monitoring system.

9. The wind-driven power-plant as claimed in the preceding claim, wherein the remote monitoring system is designed to access the control device.

10. The wind-driven power-plant as claimed in the preceding claim, wherein the remote monitoring system is designed in a way that failure of a function module (250, 250') may be diagnosed by means of the remote monitoring system.

11. The wind-driven power plant as claimed in the preceding claim, wherein the remote monitoring system is designed in a way that defect remediation can be implemented by means of the remote monitoring system.

12. The wind-driven power-plant as claimed in claim 1, wherein the design parameters are standard design parameters stored in the operations managing computer in normal operation.

13. The wind-driven power-plant as claimed in claim 1, wherein in the event of operational malfunction, the operations managing computer accesses temporary design parameters that are stored in the operations managing computer and/or are generated therein and/or are fed to it, where those temporary range limits matching operational management relating to permissible ambience and to power-plant parameters are defined which allow maintaining at least for some time generation of electrical power.

14. The wind-driven power-plant as claimed in any of the preceding claims, wherein the temporary range limits can be fed directly from the remote monitoring system into the operations managing computer.

15. The wind-driven power-plant as claimed in claim 13 or 14, wherein the operations managing computer resorts to the temporary range limits until nominal power-plant operation has been restored.

16. The wind-driven power-plant as claimed in any of the preceding claims, wherein at least two circuit elements/components/function modules and/or parallel modules (250, 250', 270)/electrical sub-assemblies (210, 220, 230) are connected to each other by separable hookup means.

17. The wind-driven power-plant as claimed in any of the preceding claims, wherein at least two circuit elements/components/function modules and/or parallel modules (250. 250', 270)/electrical sub-assemblies (210, 220, 230) are connected to each other by at least one bus system which comprises bus users, at least one transmission medium and software.

18. The wind-driven power-plant as claimed in the preceding claim, wherein the bus system is annular or a network structure.

19. The wind-driven power-plant as claimed in claim 17 or 18, wherein at least one bus user comprises a microprocessor which is programmable in a way that besides other features it also can monitor the proper operation of at least one circuit element/component, of a function module or parallel module (250, 250', 270) or of an electrical sub-assembly (210, 220, 230) and that in the event of malfunction of a circuit element/component, of a function module or parallel module (250, 250', 270) or of an electrical assembly unit (210, 220, 230) it can switch over to a replacement circuit element/component or to an operative function module or parallel module (250, 250', 270) or to an electrical assembly unit (210, 220, 230).

20. The wind-driven power-plant as claimed in claim 1, wherein at least one rotor blade (101) is angularly adjustable,

21. The wind-driven power-plant as claimed in claim 20, wherein the electrical sub-assemblies (210, 220, 230) furthermore include a rotor adjustment unit to regulate the angular setting of the at least one rotor blade (101).

22. The wind-driven power-plant as claimed in any of the preceding claims, wherein the hookup element between the generator (110) and an electrical network (125) is designed in a manner that the generator can be operated at least at two different rotational speeds, preferably within a variable rotational speed range, at the electrical network (125).

23. The wind-driven power-plant as claimed in claim 1, wherein the hookup element between the generator and the electrical network is a converter sub-assembly (230) fitted with several active switches.

24. The wind-driven power-plant as claimed in the preceding claim, wherein the converter sub-assembly (230) is fitted with at least one conversion control which allows actuating the active switches.

25. The wind-driven power-plant as claimed in the preceding claim, wherein the conversion control is connected to the control device.

26. The wind-driven power-plant as claimed in the preceding claim, wherein at least one function module (250, 250') comprises at least a portion of at least the active switches of the converter sub-assembly (230).

27. The wind-driven power-plant as claimed in any of the preceding claims, wherein the generator (110) is an AC generator, in that the converter sub-assembly (230) comprises a rectifier (254) situated at the generator side and coupled to this generator (110) and changing the AC current at least in part into a DC current or into a DC voltage, in that the converter furthermore includes a DC current intermediate circuit or a DC voltage intermediate circuit (259) which connects the generator-side rectifier (254) to at least one network-side inverter (255) connected to an electric network (125), the network-side inverter (255) converting the DC current or DC voltage into electrical power matching the electric network (125).

28. The wind-driven power-plant as claimed in the preceding claim, wherein the generator-side rectifier is fitted with active switches.

29. The wind-driven power-plant as claimed in any of the preceding claims, wherein a function module (250, 250') comprises at least the generator-side rectifier (254), the DC current or voltage intermediate circuit (259) and the network-side inverter (255).

30. The wind-driven power-plant as claimed in claim 26 or 29, wherein the function module (250, 250') is associated with at least one parallel module (270), the function and parallel modules being directly or indirectly connected by separable hookup elements (261, 262, 261', 262', 271, 272) to the generator (110) and/or directly or indirectly to the electrical network (125).

31. The wind-driven power-plant as claimed in the preceding claim, wherein if a function or parallel module (250, 250', 270) should fail, said module shall be isolated in the electrical assembly by opening the separable hookup elements (261, 262, 261', 262', 271, 272)

32. The wind-driven power-plant as claimed in claim 30 or 31, wherein the separable hookup-elements (261, 262, 261', 262', 271, 272) include at least one switch.

33. The wind-driven power-plant as claimed in the preceding claim, wherein the switch is operated manually.

34. The wind-driven power-plant as claimed in any of the preceding claims, wherein the switch is remote-controlled.

35. The wind-driven power-plant as claimed in any of the preceding claims, wherein the switch is automatically operated by the control device or by the remote monitoring system.

36. The wind-driven power-plant as claimed in any of the preceding claims, wherein at least one separable hookup (261, 262, 261', 262', 271, 272) comprises two series switch elements of which one is a power switch and the other a contactor.

## Revendications

1. Éolienne avec un rotor (100) doté d'au moins une pale de rotor (101) et directement ou indirectement couplé à un générateur (110) en vue de produire de l'énergie électrique, et avec un système électrique (200) composé de différentes unités système électriques (210, 220, 230, 400) présentant des composants électroniques, électrique et/ou électromécaniques et/ou des composants faisant fonction de capteurs et/ou des dispositifs protecteurs électrotechniques, les unités système électriques (210, 220, 230, 400) comprenant au moins un dispositif de raccordement du générateur (230) à un réseau électrique (125), et tous les composants d'une unité système électrique (210, 220, 230, 400) ou certains composants de l'unité système électrique (210, 220, 230, 400) étant regroupés en fonction de leur rôle dans un ou plusieurs modules fonctionnels (250, 250', 410) qui remplissent au moins une fonction en relation avec la production d'énergie électrique, un module parallèle (270, 410') au moins étant adjoint à au moins un module fonctionnel (250, 250', 410), ce module parallèle remplissant ou pouvant remplir, dans le cadre du fonctionnement normal de l'éolienne, une fonction identique ou similaire à celle du module fonctionnel (250, 250', 410), et le module fonctionnel (250, 250', 410) et le module parallèle (270, 410') étant connectés l'un à l'autre ou pouvant l'être de façon telle que, en cas de dysfonctionnement entraînant une panne d'un module fonctionnel (250, 250', 410) ou d'un module parallèle (270, 410'), le module fonctionnel ou parallèle (250, 250', 270, 410, 410') opérationnel restant maintienne au moins partiellement la production d'énergie électrique, **caractérisée en ce que** les unités système électriques comprennent au moins un dispositif de commande (210, 400) avec un calculateur de gestion pour, entre autres, optimiser la production d'énergie électrique, et **en ce que** les paramètres ambiants et de l'installation sont transmis au dispositif de commande (210) et que le dispositif de commande (210) assure, au moyen des paramètres ambiants et de l'installation, la gestion de l'éolienne, des valeurs limites admissibles pour les paramètres ambiants et de l'installation étant définies par l'intermédiaire de paramètres de référence.

2. Éolienne selon la revendication 1, **caractérisée en ce que** le module parallèle est conçu de façon à assumer intégralement la fonction du module fonctionnel (250, 250', 410) en cas de panne de celui-ci.

3. Éolienne selon la revendication 1, **caractérisée en ce qu'**elle présente au moins deux modules fonctionnels (250, 250', 410) qui assument des fonctions identiques ou similaires, ainsi qu'au moins un module parallèle (270, 410') qui, en cas de panne d'un module fonctionnel (250, 250'), assume de préférence intégralement la fonction de celui-ci.

4. Éolienne selon la revendication 1, **caractérisée en ce que** le dispositif de commande (400) est alimenté en énergie électrique par au moins un module d'alimentation (V, V').

5. Éolienne selon la revendication précédente, **caractérisée en ce qu'**un module d'alimentation (V, V') au moins est conçu de façon à être indépendant du réseau d'électricité public.

6. Éolienne selon l'une des revendications précédentes, **caractérisée en ce que** le système électrique présente au moins un dispositif de commande supplémentaire, le premier dispositif de commande étant conçu comme module fonctionnel et le second dispositif de commande comme module parallèle.

7. Éolienne selon la revendication 1, **caractérisée en ce qu'**un composant de rechange au moins est adjoint à au moins l'un des composants électroniques, électriques et/ou électromécaniques, les composants et composants de rechange étant connectés l'un à l'autre de façon telle qu'en cas de panne d'un composant c'est le composant de rechange qui en prend en charge la fonction.

8. Éolienne selon l'une des revendications précédentes, **caractérisée en ce que** l'éolienne permet une télémaintenance au moyen d'un système de télésurveillance.

9. Éolienne selon la revendication précédente, **caractérisée en ce que** le système de télésurveillance est conçu de façon à pouvoir accéder au dispositif de commande (210).

10. Éolienne selon la revendication précédente, **caractérisée en ce que** le système de télésurveillance est conçu de façon à ce que la défaillance d'un module fonctionnel (250, 250') puisse être diagnostiquée au moyen du système de télésurveillance.

11. Éolienne selon la revendication précédente, **caractérisée en ce que** le système de télésurveillance est conçu de façon à ce que le dépannage puisse être effectué au moyen du système de télésurveillance.

12. Éolienne selon la revendication 1, **caractérisée en ce que** les paramètres de référence dans le cadre du fonctionnement normal sont des paramètres de référence standard mémorisés dans le calculateur de gestion.

13. Éolienne selon la revendication 1, **caractérisée en ce que** le calculateur de gestion a, en cas de dysfonctionnement, recours à des paramètres de référence temporaires mémorisés et/ou générés dans le calculateur de gestion et/ou transmis au calculateur de gestion, sur la base desquels sont définies pour les paramètres ambiants et de l'installation admissibles des valeurs limites temporaires adaptées à l'exploitation et permettant de maintenir, au moins temporairement, la production d'énergie électrique.

14. Éolienne selon l'une des revendications précédentes, **caractérisée en ce que** les valeurs limites temporaires peuvent être directement entrées dans le calculateur de gestion au moyen du système de télésurveillance.

15. Éolienne selon la revendication 13 ou 14, **caractérisée en ce que** le calculateur de gestion a recours aux paramètres de référence temporaires jusqu'au rétablissement du fonctionnement normal de l'éolienne.

16. Éolienne selon l'une des revendications précédentes, **caractérisée en ce qu'**au moins deux composants / modules fonctionnels et/ou parallèles (250, 250', 270) / unités système (210, 220, 230) sont connectés l'un à l'autre au moyen de connexions séparables.

17. Éolienne selon l'une des revendications précédentes, **caractérisée en ce qu'**au moins deux composants / modules fonctionnels et/ou parallèles (250, 250', 270) / unités système (210, 220, 230) sont connectés l'un à l'autre au moyen d'au moins un système de bus, ce système de bus comprenant au moins des participants au bus, un moyen de transmission au moins, ainsi qu'un logiciel.

18. Éolienne selon la revendication précédente, **caractérisée en ce que** le système de bus est réalisé avec une structure annulaire ou en réseau.

19. Éolienne selon la revendication 17 ou 18, **caractérisée en ce qu'**au moins un participant au bus est doté d'un microprocesseur pouvant être programmé de façon à ce qu'il puisse contrôler, entre autres, le bon fonctionnement d'au moins un composant, un module fonctionnel ou parallèle (250, 250', 270) ou une unité système (210, 220, 230) et, en cas de panne d'un composant, d'un module fonctionnel ou parallèle (250, 250', 270) ou d'une unité système (210, 220, 230), commuter sur un composant de rechange ou un module fonctionnel ou parallèle (250, 250', 270) opérationnel ou une unité système (210, 220, 230) opérationnelle.

20. Éolienne selon la revendication 1, **caractérisée en ce qu'**au moins une pale du rotor (101) est conçue de façon à pouvoir en régler l'angle.

21. Éolienne selon la revendication 20, **caractérisée en ce que** les unités système électriques (210, 220, 230) comprennent en outre un système de réglage de pale (220) permettant de régler l'angle d'au moins une pale du rotor (101).

22. Éolienne selon l'une des revendications précédentes, **caractérisée en ce que** le dispositif de raccordement du générateur (230) au réseau électrique (125) est conçu de façon à ce que le générateur connecté au réseau (125) puisse opérer avec au moins deux vitesses de rotation différentes, de préférence avec un régime variable.

23. Éolienne selon la revendication 1, **caractérisée en ce que** le dispositif de raccordement du générateur au réseau électrique est un système convertisseur (230) présentant plusieurs commutateurs actifs.

24. Éolienne selon la revendication précédente, **caractérisée en ce que** le système convertisseur (230) présente au moins une commande du convertisseur pouvant être actionnée au moyen des commutateurs actifs.

25. Éolienne selon la revendication précédente, **caractérisée en ce que** la commande du convertisseur est couplée au dispositif de commande.

26. Éolienne selon la revendication précédente, **caractérisée en ce qu'**au moins un module fonctionnel (250, 250') est conçu de façon à comprendre, au moins en partie, au moins les commutateurs actifs du système convertisseur (230).

27. Éolienne selon l'une des revendications précédentes, **caractérisée en ce qu'**un courant alternatif peut être produit à l'aide du générateur (110), que le système convertisseur (230) présente au moins un onduleur côté machine (254) couplé au générateur (110) et convertissant en partie au moins le courant alternatif en courant continu ou en tension continue, et que le système convertisseur présente en outre un circuit intermédiaire à courant continu ou un circuit intermédiaire à tension continue (259) qui relie l'onduleur côté machine (254) à au moins un onduleur côté réseau (255) couplé au réseau électrique (125), l'onduleur côté réseau (255) transformant le courant continu ou la tension continue en une puissance électrique adaptée au réseau électrique (125).

28. Éolienne selon la revendication précédente, **caractérisée en ce que** l'onduleur côté machine (254) présente des commutateurs actifs.

29. Éolienne selon l'une des revendications précédentes, **caractérisée en ce qu'**un module fonctionnel (250, 250') comprend au moins l'onduleur côté machine (254), le circuit intermédiaire à courant continu à tension continue (259) ainsi que l'onduleur côté réseau (255).

30. Éolienne selon la revendication 26 ou 29, **caractérisée en ce qu'**au moins un module parallèle (270) est prévu pour le module fonctionnel (250, 250'), le module parallèle et le module fonctionnel étant, par l'intermédiaire de connexions séparables (261, 262, 216', 262', 271, 272), connectés directement ou indirectement au générateur (110) et/ou directement ou indirectement au réseau électrique (125).

31. Éolienne selon la revendication précédente, **caractérisée en ce qu'**en cas de panne d'un module fonctionnel ou parallèle (250, 250', 270), le module défaillant peut être isolé du système électrique par coupure des connexions séparables (261, 262, 216', 262', 271, 272).

32. Éolienne selon la revendication 30 ou 31, **caractérisée en ce que** les connexions séparables (261, 262, 216', 262', 271, 272) comportent au moins un élément de commutation.

33. Éolienne selon la revendication précédente, **caractérisée en ce que** l'élément de commutation peut être actionné manuellement.

34. Éolienne selon l'une des revendications précédentes, **caractérisée en ce que** l'élément de commutation peut être commandé à distance.

35. Éolienne selon l'une des revendications précédentes, **caractérisée en ce que** l'élément de commutation peut être actionné automatiquement par le dispositif de commande (210) ou le système de télésurveillance.

36. Éolienne selon l'une des revendications précédentes, **caractérisée en ce qu'**au moins une connexions séparables (261, 262, 216', 262', 271, 272) présente deux éléments de commutation montés en série dont l'un est un disjoncteur de puissance et l'autre un contacteur.
